# EUROPÄISCHE PATENTSCHRIFT

(11) **EP 0 836 931 B1**
(45) Veröffentlichungstag und Bekanntmachung des Hinweises auf die Patenterteilung: **05.04.2006**
(21) Anmeldenummer: 97117118.6
(22) Anmeldetag: 02.10.1997
(51) Int. Cl.: B32B 5/28, B32B 15/02, B29C 70/02, F01D 5/28, F04D 29/02, B64C 11/20

(54) **Verfahren zum Herstellen eines Schichtkörpers**
Method for manufacturing a laminated body
Procédé pour la fabrication d'un corps stratifié

(30) Priorität: 18.10.1996 DE 19642983
(43) Veröffentlichungstag der Anmeldung: 22.04.1998
(73) Patentinhaber: MTU Aero Engines GmbH, 80995 München (DE)
(72) Erfinder: Sikorski, Siegfried, 80997 München (DE); Schober, Michael, 80999 München (DE); Schönacher, Reinhold, 80999 München (DE)

(56) Entgegenhaltungen:
- DE-A- 3 015 208
- US-A- 1 367 132
- US-A- 3 278 279
- US-A- 3 892 612
- US-A- 5 449 273

## Beschreibung

Die Erfindung betrifft ein Verfahren zumHerstellen eines Schichtkörpers

Zahlreiche Produkte und Teile von Produkten werden heutzutage aus Schichtkörpern gebildet. Um bei häufig angestrebtem geringem Gewicht eine ausreichende Festigkeit und Belastbarkeit dieser Produkte bzw. Teile davon zu erreichen, wird eine Faserverbundbauweise verwendet. Gerade unter hohen mechanischen Belastungen haben übliche Faserverbundteile jedoch eine geringe Abriebsbeständigkeit. Dies führt zu einer begrenzten Lebensdauer dieser Teile.

Bauteile und insbesondere Schaufeln aus faserverstärktem Verbundwerkstoff, die einer Fluidströmung von Strömungsmaschinen ausgesetzt sind, sind durch abrasive Partikel im Fluidstrom und durch thermische Beanspruchung erosionsgefährdet. Zum Schutz von Triebwerksbauteilen wird in der DE 43 43 904 A vorgeschlagen, auf das Bauteil eine erosionsbeständige, anorganische Lackschicht aufzutragen. Mit diesem Verfahren können die Bauteile zwar auch repariert werden, problematisch ist jedoch die Beständigkeit der Haftung der Lackschicht auf den Bauteilen, so dass häufig ein wiederholtes Auftragen der Lackschicht insbesondere während der Bauteileinsatzzeit erforderlich wird.

Alternativ hierzu ist in der DE 42 08 842 C ein Erosionsschutz für Hubschrauberrotorblätter aus faserverstärkten Kunststoffmaterialien offenbart. Dieser wird demnach dadurch erreicht, dass das Rotorblatt an den kritischen Stellen mit einem aufgeklebten Blech belegt ist, das mit Partikeln aus Metallverbindungen beschichtet ist. Auch hier stellt sich das Problem der Beständigkeit der Haftung des aufgeklebten Bleches auf der darunter liegenden Faserverbundstrukur.

Die US-A-5 449 273 schützt ein Verfahren zur Herstellung einer erosionsbeständigen Schaufel aus Faserverbundwerkstoff. Dabei wird ein Gitter, vorzugsweise aus Edelstahldraht, mit einer erosionsbeständigen Beschichtung versehen, an die Schaufeleintrittskante angepasst und mit dieser mittels Kunstharz stoffschlüssig verbunden. Das Kunstharz durchdringt die Gittermaschen, wodurch das Gitter und die Schaufel sicher miteinander verbunden werden. Als Drahtbeschichtungen werden galvanisch abgeschiedenes Nickel, Titannitrid oder Titandiborid vorgeschlagen. Solche Beschichtungen sind relativ glatt und verbessern die Verschleißfestigkeit des Gitterwerkstoffes. Sie verbessern nicht die Verbindung des Gitters mit der Schaufel. Bei Verwendung eines metallischen Gitters mit einer metallischen Beschichtung wird die elektrische Leitfähigkeit der Schaufel verbessert bzw. hergestellt, was als Blitzschutz dienen kann.

Die DE 30 15 208 A betrifft ein Laufrad für Ventilatoren, dessen Schaufeln als glasfaserverstärkte Kunststoffteile mit einem Stahlkern ausgeführt sind. Zur Reduzierung bzw. Vermeidung elektrostatischer Aufladung ist in die Schaufeloberfläche elektrisch leitendes Material eingebettet, das über den Stahlkern und die Laufradnabe durch elektrisch leitende Verbindung geerdet ist. Als solches Material wird ein Drahtnetz, insbesondere aus Bronze, Matallstaub bzw. -späne, insbesondere aus Kupfer oder Bronze, oder eine Kombination eines Drahtnetzes mit Metallstaub bzw. -spänen vorgeschlagen. Es wird darauf hingewiesen, dass die Metallelemente auch die Abriebfestigkeit der Schaufeln erhöhen. Da das Drahtnetz und die Metallpartikel nacheinander in separaten Schichten aufgebracht werden, entsteht dabei kein besonders fester Verbund.

Angesichts dieser bekannten Lösungen besteht die Aufgabe der Erfindung darin, ein Verfahren zur Herstellung eines Schichtkörpers mit einer metallische Fasern und/oder Fäden enthaltenden Deckschicht anzugeben, welches zu einer optimalen Anbindung der Deckschicht sowie zu einer optimalen Schutz- und Verstärkungswirkung führt.

Diese Aufgabe wird durch die in Patentanspruch 1 gekennzeichneten Merkmale gelöst, in Verbindung mit den gattungsbildenden Merkmalen in dessen Oberbegriff. Dabei ist vorgesehen, dass in die Deckschicht im Bereich der metallischen Fasern und/oder Fäden Partikel eingelagert werden, bevor die wenigstens eine Faserschicht des Substrats und die Deckschicht im Bereich der metallischen Fasern und/oder Fäden mit Bindemittel getränkt werden.

im Unterschied zu einer früheren Eigenentwicklung der Anmelderin braucht beim vorliegenden Verfahren auf keine zusätzliche Oberflächenformgebung oder Schichtdicke einer gesonderten Schutzschicht auf dem ansonsten fertigen Schichtkörper geachtet zu werden, was den Herstellungsprozess vereinfacht und den Aufwand hierfür senkt.

Bevorzugterweise werden die Partikel in einem pastösen oder flüssigen Trägermittel bereitgestellt, und die Deckschicht wird zumindest im Bereich der metallischen Fasern und/oder Fäden zum Einlagern der Partikel in dieses Trägermittel getaucht oder davon durchströmt.

Gemäß einer Variante dieser Ausführungsform des erfindungsgemäßen Verfahrens zum Herstellen eines Schichtkörpers wird als Trägermittel eine flüssige Lösung, insbesondere eine alkoholische oder alkoholähnliche Lösung, beispielsweise Ethanol, verwendet. Ein solches Trägermittel wird dann vor dem Tränken der wenigstens einen Faserschicht des Substrats und der Deckschicht im Bereich der metallischen Fasern und/oder Fäden mit Bindemittel unter Zurückbelassung von Partikeln an den metallischen Fasern und/oder Fäden der Deckschicht entfernt, was durch Verdunsten oder Verdampfen erreicht werden kann.

Eine weitere grundsätzliche Möglichkeit, die Partikel im Rahmen der Erfindung in dem Bereich der metallischen Fasern und/oder Fäden der Deckschicht einzulagern, besteht darin, als Trägermittel ein Lot, ein Haftmittel, wie insbesondere einen Kleber, oder einen Thermoplast zu verwenden. In diesem Fall verbleibt das Trägermittel zusammen mit Partikeln während des Tränkens der wenigstens einen Faserschicht des Substrats und der Deckschicht im Bereich der metallischen Fasern und/oder Fäden mit Bindemittel an den metallischen Fasern und/oder Fäden der Deckschicht und bildet somit einen zumindest teilweisen Überzug über den metallischen Fasern und/oder Fäden der Deckschicht. Bevorzugt gestattet es ein derartiges Trägermittel, dass die entsprechend behandelte Deckschicht noch formbar oder formanpassbar ist.

In Weiterbildung der vorstehend genannten Ausführungsmöglichkeiten kann ferner vorgesehen werden, dass die Partikel vor dem Kontakt des Trägermittels mit den metallischen Fasern und/oder Fäden der Deckschicht durch Einpressen oder Einsintern in das Trägermittel gebracht werden.

Das Trägermittel kann allgemein auch durch Schütten, Berieseln oder Besprühen auf oder in den Bereich der metallischen Fasern und/oder Fäden der Deckschicht auf- bzw. eingebracht werden.

Durch die Erfindung ist ferner eine Verfahrensvariante erfasst, bei der die Partikel in Pulverform bereitgestellt werden. Auch hierbei erfolgt das Einbringen der Partikel in den Bereich der metallischen Fasern und/oder Fäden der Deckschicht dadurch, dass letztere zumindest im Bereich der metallischen Fasern und/oder Fäden zum Einlagern der Partikel darin in das Partikelpulver getaucht oder davon durchströmt wird. Alternativ kann das Partikelpulver z.B. auch einfach durch Schütten oder Berieseln auf den Bereich der metallischen Fasern und/oder Fäden der Deckschicht aufgebracht werden. Auch ein Besprühen des Bereiches der metallischen Fasern und/oder Fäden der Deckschicht mit dem Partikelpulver ist möglich, wenn beispielsweise Druckluft als Transportmedium für die Partikel verwendet wird.

Die einzelnen Partikel werden in dem Bereich der metallischen Fasern und/oder Fäden bei den vorerwähnten Möglichkeiten dann mechanisch oder beispielsweise elektrostatisch gehalten. Es sind im erfindungsgemäßen Umfang aber auch andere Möglichkeiten in Erwägung zu ziehen, damit die Partikel an den metallischen Fasern und/oder Fäden anhaften, wie beispielsweise Klebeeigenschaften der Partikel oder deren Oberfläche.

Es besteht im Rahmen der Erfindung uneingeschränkt die Möglichkeit, die Partikel ganz oder teilweise durch das Bindemittel, ggf. das Trägermittel, mechanische Verklammerung mit den metallischen Fasern und/oder Fäden der Deckschicht, Sintern oder Hippen mit den metallischen Fasern und/oder Fäden der Deckschicht zu verbinden.

In Übereinstimmung mit einer besonders bevorzugten Variante des Schichtkörpers wird aus den metallischen Fasern und/oder Fäden der Deckschicht ein Filz hergestellt, bevor die Partikel darin eingesetzt werden. Alternativ oder zusätzlich kann zur Bildung des Bereiches der Deckschicht mit den metallischen Fasern und/oder Fäden aus diesen jedoch auch ein Geflecht und/oder Gewebe gebildet werden.

Eine bevorzugte Vorgehensweise bei dem erfindungsgemäßen Verfahren zum Herstellen eines Schichtkörpers besteht darin, die wenigstens eine Faserschicht des Substrats und die Deckschicht im Bereich der metallischen Fasern und/oder Fäden zonenweise mit Bindemittel zu tränken.

Bei einer weiteren vorzugsweisen Verfahrensausgestaltung ist vorgesehen, dass zum Bilden des Substrats und der Deckschicht und zu deren Verbindung ein einheitliches Bindemittel verwendet wird. Grundsätzlich können jedoch insbesondere schichtweise verschiedene Bindemittel verwendet werden, um den verwendeten Fasermaterialien und/oder den geforderten andwendungsbedingten Eigenschaften des Schichtkörpers und insbesondere seiner Deckschicht möglichst optimal gerecht zu werden.

Um Formnachbearbeitungen weitgehend zu vermeiden, ist es vorzuziehen, das Tränken der wenigstens einen Faserschicht des Substrats und der Deckschicht im Bereich der metallischen Fasern und/oder Fäden mit Bindemittel in einer Form oder einem Formhohlraum durchzuführen. Wenn es der beabsichtige Einsatz eines Schichtkörpers erforderlich macht, kann insbesondere die Deckschicht aber auch danach oder grundsätzlich überhaupt auf ihrer dem Substrat abgewandten Seite nach dem Tränken der wenigstens einen Faserschicht des Substrats und der Deckschicht im Bereich der metallischen Fasern und/oder Fäden mit Bindemittel und insbesondere nach dem Verfestigen des letzteren einer Oberflächenbehandlung unterzogen werden, wie nach einer anderen Verfahrensvariante vorgesehen ist.

Weitere vorteilhafte und bevorzugte Ausgestaltung der Erfindung ergeben sich aus den abhängigen Ansprüchen und deren Kombinationen.

Die Erfindung wird nachfolgend exemplarisch zur Verdeutlichung anhand von Ausführungsbeispielen unter Bezugnahme auf die Figuren der Zeichnung genau beschrieben, in der:
- Fig.1: eine schematische teilweise geschnittene Seitenansicht einer aus einem Schichtkörper aufgebauten Schaufel einer Strömungsmaschine,
- Fig.2: eine schematische vergrößerte Ansicht einer Deckschicht aus einer ersten Ausführungsform eines Filzes aus metallischen Fasern und/oder Fäden mit eingelagerten Partikeln,
- Fig. 3: eine schematische vergrößerte Ansicht einer Deckschicht aus einer zweiten Ausführungsform eines Filzes aus metallischen Fasern und/oder Fäden mit eingelagerten Partikeln,
- Fig. 4: eine schematische vergrößerte Ansicht einer Deckschicht aus einer ersten Ausführung eines Gewebes oder Geflechts aus metallischen Fasern und/oder Fäden mit eingelagerten Partikeln,
- Fig. 5: eine schematische vergrößerte Ansicht einer Deckschicht aus einer zweiten Ausführung eines Gewebes oder Geflechts aus metallischen Fasern und/oder Fäden mit eingelagerten Partikeln,
- Fig. 6: eine schematische vergrößerte Ansicht einer Deckschicht aus einer dritten Ausführung eines Gewebes oder Geflechts aus metallischen Fasern und/oder Fäden mit eingelagerten Partikeln, und
- Fig. 7: eine schematische vergrößerte Ansicht einer Deckschicht aus einer vierten Ausführung eines Gewebes oder Geflechts aus metallischen Fasern und/oder Fäden mit eingelagerten Partikeln.

In den Figuren der Zeichnung sind gleiche oder ähnliche oder gleich oder ähnlich wirkende Teile mit denselben Bezugszeichen versehen. Durch die Darstellungen in der Zeichnung im einzelnen und deren Zusammenschau sind die erfindungsgemäßen Ausgestaltungen für den Fachmann ohne weiteres ersichtlich und verständlich, selbst wenn nicht zu jeder Figur konkret darauf Bezug genommen ist.

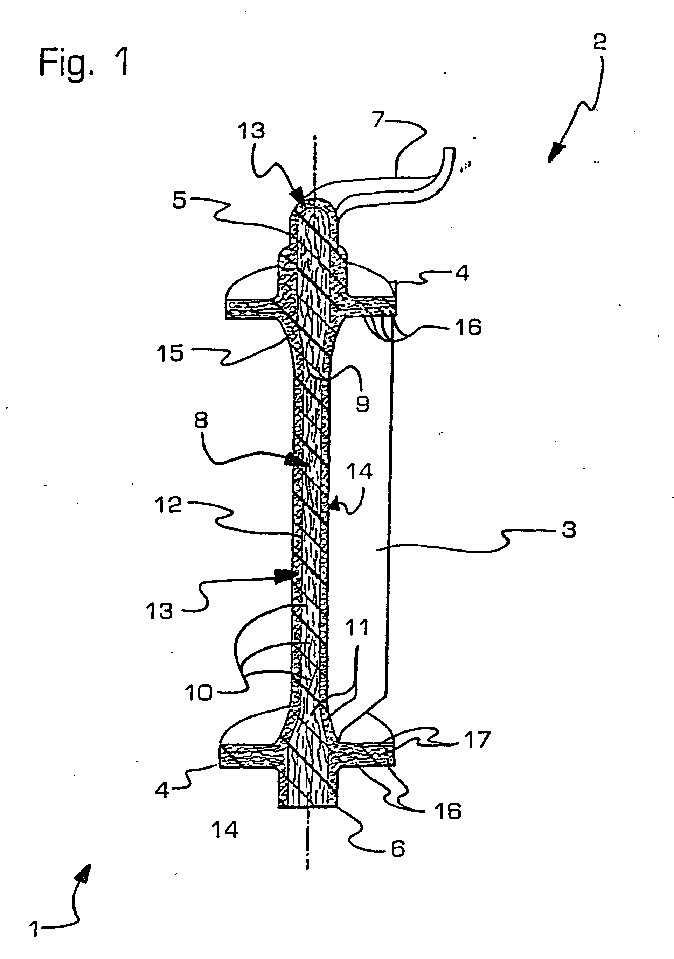

In der Fig. 1 ist schematisch und teilweise geschnitten eine aus einem Schichtkörper 1 aufgebaute Leitschaufel 2 eines nicht dargestellten Verdichters gezeigt, wie er beispielsweise bei Strömungsmaschinen verwendet wird. Die durchgehend als Schichtkörper 1 ausgeführte Schaufel 2 weist ein Schaufelblatt 3 und zwei an in der Längsausdehnung des letzteren entgegengesetzten Stimrändern 4 liegende Lagerzapfen 5, 6 auf. An dem in der Darstellung oben gezeigte Lagerzapfen 5 ist ferner ein Verstellhebel 7 angebracht, der ebenfalls in Schichtbauweise ausgebildet ist.

Der Schichtkörper 1 enthält allgemein ein Substrat 8, das grundsätzlich und im wesentlichen Form und Größe der Leitschaufel 2 mit allen Ausformungen und Anbauteilen bestimmt. Das Substrat 8 besteht aus einem faserverstärkten Kunststoff, d.h., es enthält Schichten 9 aus Verstärkungsfasern 10 und ein Bindemittel 11. Das Bindemittel 11 ist ein Harz oder Kunstharz, das, nachdem es in das Geflecht aus Verstärkungsfasern 10 geschüttet oder darauf aufgestrichen wurde, aushärtet. Als Bindemittel 11 können jedoch lediglich in Abhängigkeit von den zu erzielenden Eigenschaften eines herzustellenden Bauteils auch andere verfestigbare Substanzen verwendet werden.

Auf die Oberfläche 12 des Substrats 8 ist vollflächig eine Deckschicht 13 aufgebracht, die bei dem in der Fig. 1 gezeigten Ausführungsbeispiel aus einem Filz 14 von Nickelfasern mit einer Porosität von etwa 95 % besteht, in den vor dem Auffüllen der Poren 15 der Deckschicht 13 mit demselben Bindemittel 11 wie jenem, das für das Substrat 8 verwendet wurde, Partikel 16 eingelagert wurden. Genauer gesagt wurden das Substrat 8 und die Deckschicht 13 in einem Arbeitsprozeß gleichzeitig oder unmittelbar aufeinanderfolgend mit dem Bindemittel 11 getränkt, so daß durch letzteres nach seinem Verfestigen ein Verbund zwischen den Verstärkungsfasern 10 des Substrats 8 und den metallischen Fasern und/oder Fäden 17 der Deckschicht 13 in Form der Nickelfasern hergestellt ist.

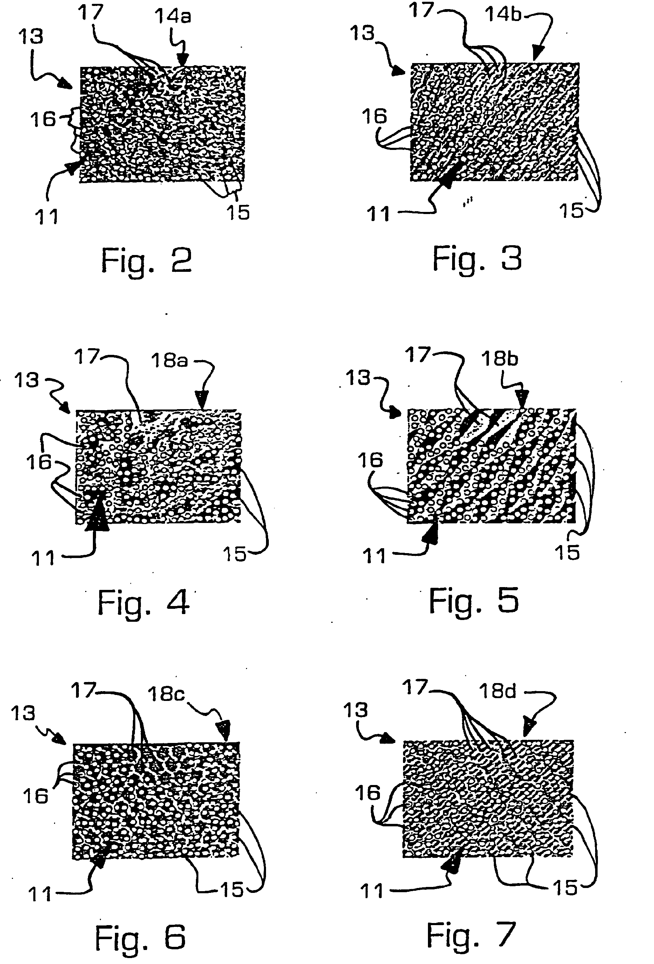

Das Substrat 8 muß nicht zwingend eine einzige Faserschicht 9 aufweisen, sondern kann eine Mehrzahl davon enthalten. Jede Faserschicht 9 kann filz-, geflecht- und/oder gewebeartig aufgebaut sein. Beispielsweise können die Fasern 10 Kohlefasem sein. Die unmittelbar an die äußerste Faserschicht 9 anschließende Deckschicht 13 muß nicht unbedingt und vollständig aus dem Filz 14 basieren. Alternativ oder zusätzlich zum Filz 14 können beispielsweise andere Filzarten 14a, 14b, die schematisch und vergrößert in den Fig. 2 und 3 gezeigt sind, oder Geflechte oder Gewebe 18a, 18b, 18c, 18d, die im Prinzip und in vergrößerter Ansicht in den Fig. 4 bis 7 dargestellt sind, verwendet werden. Sowohl das Substrat 8, als auch die Deckschicht 13 können auch weitere Bestandteile (nicht gezeigt), enthalten.

Durch die Einlagerung von Partikeln 16 in den Bereich der metallischen Fasern und/oder Fäden 17 der Deckschicht 13 wird deren Abriebfestigkeit verbessert. Ferner lassen sich durch die zugegebenen Partikel 16 beispielsweise als weiterer Vorteil niedrigere oder höhere Reibungskoeffizienten im Zusammenhang mit einem solchen Schichtkörper 1 je nach Anwendungserfordernis einstellen. Durch die metallischen Fasern und/oder Fäden 17 hat die Deckschicht 13 eine elektrische Leitfähigkeit, die durch Auswahl und Gestaltung der metallischen Fasern und/oder Fäden 17 beeinflußt werden kann. Weiterhin läßt sich das abrasive Verhalten dieser Schichtkörpers 1 durch den Aufbau seiner Deckschicht 13 positiv beeinflussen. Insbesondere kann die Deckschicht im Vergleich zum Substrat eine höhere Abriebfestigkeit, eine höhere Feuerfestigkeit und/oder eine höhere elektrische Leitfähigkeit aufweisen.

In Abhängigkeit von den Einsatzanforderungen des Schichtkörpers 1 können lediglich in Abhängigkeit von den geplanten Einsatzanforderungen an den Schichtkörper 1 und/oder die Materialien der Verstärkungsfasern 10 des Substrats 8 und der metallischen Fasern, und/oder Fäden 17 der Deckschicht 13 insbesondere schichtweise verschiedene Bindemittel verwendet werden.

Je nach den gewünschten Eigenschaften der Deckschicht 13 können metallische, keramische und/oder glasartige Partikel 16 verwendet werden. Insbesondere können die Partikel 16 TiC, TiN, TiAl. Fe, Stahl, Ni, Si, Metallegierungen, Diamant, Glas und Verbindungen damit sowie Kombinationen davon enthalten. Hinsichtlich ihrer Bauform und Geometrie können die Partikel 16 massiv, porös oder hohl sein.

Um das Einbringen der Partikel 16 in den Bereich der metallischen Fasern und/oder Fäden 17 der Deckschicht 13 zu erleichtern und zu optimieren, ist es von Vorteil, wenn die Partikel 16 Bestandteile eines Trägermittels sind, das in den Abbildungen jedoch nicht dargestellt ist. Ein solches Trägermittel kann ein Lot, ein Haftmittel, wie insbesondere ein Kleber, oder ein Thermoplast sein.

Die Anbindung der Partikel 16 an die metallischen Fasern und/oder Fäden 17 der Deckschicht 13 kann beispielsweise je einzeln oder in Kombination durch das Bindemittel 11, ggf. das Trägermittel, mechanische Verklammerung mit den metallischen Fasern und/oder Fäden 17 der Deckschicht 13, Sintern oder Hippen mit den metallischen Fasern und/oder Fäden 17 der Deckschicht 13 erfolgen.

Nachfolgend wird eine Möglichkeit zur Herstellung des Schichtkörpers 1 angegeben.

In den Metallfilz 14 werden Partikel 16 eingelagert. Dies kann exemplarisch durch Ausfiltern der Partikel 16 aus einer flüssigen Lösung, wie z.B. Ethanol, geschehen.

Damit die Partikel 16 gut in dem Filz 14, 14a, 14b oder einem Geflecht oder Gewebe 18a, 18b, 18c, 18d verteilt und ggf. befestigt werden, können sie allgemein in einem pastösen oder flüssigen Trägermittel bereitgestellt werden.

Ein solches Trägermittel kann eine flüssige Lösung, insbesondere eine alkoholische oder alkoholähnliche Lösung, wie beispielsweise das genannte Ethanol, sein und wird dann vor dem Tränken der wenigstens einen Faserschicht 9 des Substrats 8 und der Deckschicht 13 im Bereich der metallischen Fasern und/oder Fäden 17 mit Bindemittel 11 unter Zurückbelassung von Partikeln 16 an den metallischen Fasern und/oder Fäden 17 der Deckschicht 13 entfernt, was durch Verdunsten oder Verdampfen erreicht werden kann.

Das Einlagern der Partikel 16 kann z.B. aber auch durch zonenweises Durchtränken des Filzes 14 mit einem Lot oder einem Thermoplast als Trägermittel unterstützt werden, in das die Partikel 16 eingepreßt oder eingesintert wurden. Auch ein Haftmittel, wie insbesondere ein Kleber, kann als ein derartiges Trägermittel verwendet werden. Dieses Trägennittel verbleibt zusammen mit Partikeln 16 während des Tränkens der wenigstens einen Faserschicht 9 des Substrats 8 und der Deckschicht 13 im Bereich der metallischen Fasern und/oder Fäden 17 mit Bindemittel 11 an den metallischen Fasern und/oder Fäden 17 der Deckschicht 13 und bildet somit einen zumindest teilweisen Überzug über den metallischen Fasern und/oder Fäden 17 der Deckschicht 13. Für den späteren Formgebungsprozeß ist es ggf. erforderlich, daß das Trägermittel die entsprechend behandelte Deckschicht 13 noch formbar oder formanpaßbar beläßt.

Danach können die z.B. metallischen Partikel 16 durch Sintern mit den metallischen Fasern 17 des Metallfilzes 14 verbunden werden. Der Filz 14 und die Partikel 16 werden so gewählt, daß die Kombination noch eine Porosität enthält. Diese Porosität wird beim Laminieren des Faserverbundbauteils z.B. in Form der Leitschaufel 2 mit Harz als Bindemittel 11 gefüllt. Damit wird auch gleichzeitig die Verbindung zwischen dem Substrat 8 und der Deckschicht 13 bewirkt. Diese als Schutzschicht fungierende Deckschicht 13 kann auch nachträglich auf ein aus einem ausgehärteten Substrat 8 gebildeten Bauteil insbesondere auch zu dessen Reparatur aufgebracht werden.

Bei einer weiteren Verfahrensvariante zum Einbringen der Partikel 16 in den Bereich der metallischen Fasern und/oder Fäden 17 der Deckschicht 13 werden die Partikel 16 in Pulverform bereitgestellt. Auch hierbei erfolgt das Einbringen der Partikel 16 in den Bereich der metallischen Fasern und/oder Fäden 17 der Deckschicht 13 dadurch, daß letztere zumindest im Bereich der metallischen Fasern und/oder Fäden 17 zum Einlagern der Partikel 16 darin in das Partikelpulver getaucht oder davon durchströmt wird. Alternativ kann das Partikelpulver z.B. auch einfach durch Schütten oder Berieseln auf den Bereich der metallischen Fasern und/oder Fäden 17 der Deckschicht 13 aufgebracht werden. Auch ein Besprühen des Bereiches der metallischen Fasern und/oder Fäden 17 der Deckschicht 13 mit dem Partikelpulver ist möglich, wenn beispielsweise Druckluft als Transportmedium für die Partikel 16 verwendet wird. Die einzelnen Partikel 16 werden in dem Bereich der metallischen Fasern und/oder Fäden 17 dann z.B. mechanisch oder beispielsweise elektrostatisch oder durch Klebeeigenschaften der Partikel 16 oder deren Oberfläche gehalten.

Die Deckschicht 13 wird zum Einbringen und Einlagern der Partikel 16 in den bzw. dem Bereich der metallischen Fasern und/oder Fäden 17, wie bereits erwähnt wurde, vorzugsweise in das Trägermittel oder das Partikelpulver getaucht oder davon durchströmt. Das Trägermittel kann aber allgemein auch durch Schütten, Berieseln oder Besprühen auf oder in den Bereich der metallischen Fasern und/oder Fäden 17 der Deckschicht 13 auf- bzw. eingebracht werden.

Bevorzugt ist es zwar, daß die Partikel 16 in die Deckschicht 13 im Bereich der metallischen Fasern und/oder Fäden 17 eingelagert werden, bevor die wenigstens eine Faserschicht 9 des Substrats 8 und die Deckschicht 13 im Bereich der metallischen Fasern und/oder Fäden 17 mit Bindemittel 1 getränkt werden. Es ist jedoch allgemein auch möglich, die Partikel 16 zusammen mit dem Bindemittel 11 in den Bereich der metallischen Fasern und/oder Fäden 17 der Deckschicht 13 einzubringen. Somit ist es möglich, die Partikel 16 ganz oder teilweise durch das Bindemittel 11, ggf. das Trägermittel, mechanische Verklammerung mit den metallischen Fasern und/oder Fäden 17 der Deckschicht 13, Sintern oder Hippen mit den metallischen Fasern und/oder Fäden 17 der Deckschicht 13 zu verbinden.

Der Aufbau des Schichtkörpers 1 kann in einer Form erfolgen. Nach dem Verfestigen des Bindemittels 11 oder der Bindemittel kann insbesondere eine Oberflächenbehandlung durchgeführt werden.

Ein gemäß der vorstehenden Beschreibung aufgebauter oder hergestellter Schichtkörper 1 hat auf Grund seiner Deckschicht 13 mit den Partikeln 16 und dem Filz 14, 14a, 14b, Geflecht oder Gewebe 18a, 18b, 18c, 18d aus metallischen Fasern und/oder Fäden 17 insbesondere Oberflächeneigenschaften, die von dem Faserverbund-Substrat 8 nicht zu erreichen sind. Insbesondere sind dies: Durch Material und Struktur in der Deckschicht 13 vorgebbare Abriebfestigkeit, wählbare niedrige oder hohe Reibkoeffizienten und ein definiert erzeugbares abrasives Verhalten.

Die Anbindung der Partikel 16 an die metallischen Fasern und/oder Fäden 17 der Deckschicht 13 erfolgt nicht nur durch das durch das Bindemittel 11 gebildete Matrixharz, sondern ggf. auch z.B. durch eine mechanische Verklammerung oder Verklemmung der Partikel 16 zwischen den die metallischen Fasern und/oder Fäden 17, bei geeignetem metallischem Partikelpulver durch Sintern mit den metallischen Fasern und/oder Fäden 17 oder durch Hippen, durch Anbindung mit metallischem Lot und/oder durch Anbindung mit thermoplastischem Klebstoff.

Ein weiterer Vorteil des Schichtkörpers 1 besteht wegen seiner Deckschicht 13 darin, daß er dadurch wegen der möglichen Toleranzen für Werkzeugmaschinen leichter bearbeitet werden kann, als bei einem anderen Aufbau des Schichtkörpers 1.

Lediglich beispielhaft werden nachfolgend noch einige Anwendungen bei Verstellschaufeln von Strömungsmaschinen angegeben, bei denen sich der Schichtkörper 1 mit Vorteil verwenden läßt:
- Lagerstellen an den Verstellschaufeln der Strömungsmaschinen, einschließlich Triebwerken,
- Reibflächen, wie sie z.B. bei einer Schwalbenschwanzgestaltung zwischen der Schaufel und einer diese haltenden Scheibe auftreten, und
- Anstreifbeläge zwischen einem Gehäuse und der Schaufel an der Schaufelspitze und der dieser gegenüberliegenden Gehäusefläche.

Weitere nicht abschließende Beispiele für Anwendungsmöglichkeiten des Schichtkörpers 1 sind:
- Anreibflächen bei Dichtringen, einschließlich Kolbenringen,
- als Feuerschutz, z.B. Titanfeuerschutz, im Bypassduct oder in einem Verdichtergehäuse wegen der Veränderung des Brandverhaltens des Schichtkörpers 1 durch seine Deckschicht 13,
- als Blitzschutz wegen der elektrischen Leitfähigkeit des Schichtkörpers 1 durch seine Deckschicht 13,
- Kontaktflächen unter Schraub- und Nietverbindungen (hierbei spielt die plastische Verformbarkeit und der Korrosionsschutz eine große Rolle, da Metall-Faserverbundkörper korrosionsgefährdet sind),
- Kolbenhemden, Pleuellager,
- Scheibenbremsen, wobei derzeit eine niedrige Temperaturbelastung von weniger als etwa 250 °C vorausgesetzt wird, was jedoch in Abhängigkeit von noch zu prüfenden Materialkombinationen in einem entsprechenden Schichtkörper 1 nicht als absolute Obergrenze verstanden werden soll,
- Scheibenräder für Fahrräder,
- Innenseiten von Rohrleitungen, die abrasive Medien transportieren, wie z.B. Bohrspülungen im Bergbau, Rohöl, etc., und
- zum Zwecke einer Enteisung heizbare Kanten beispielsweise an einem Triebwerkseinlauf.

Die vorstehende Beschreibung und Vermendungs des Verfahrens zur Herstellung eines Schichtkörpers und Verwendungs beispielen des Schichtkörpers beispielen des Schichtkôrpers im Rahmen der Erfindung dient lediglich der Verdeutlichung einzelner Vorrichtungs- und Verfahrensmerkmale. Die Erfindung ist jedoch nicht auf die konkreten Ausführungsformen beschränkt, die insbesondere im Zusammenhang mit der Zeichnung beschrieben sind. Der gesamte Umfang der Erfindung wird durch die Ansprüche bestimmt.

## Patentansprüche

1. Verfahren zum Herstellen eines Schichtkörpers mit einem Substrat, das wenigstens eine Faserschicht enthält, und mit einer an letztere anschließenden Deckschicht, die zumindest der wenigstens einen Faserschicht benachbart metallische Fasern und/oder Fäden enthält, wobei die wenigstens eine Faserschicht des Substrats und die metallischen Fasern und/oder Fäden der Deckschicht mit Bindemittel getränkt und **dadurch** das Substrat und die Deckschicht gebildet und verbunden werden, **dadurch gekennzeichnet, dass** in die Deckschicht (13) im Bereich der metallischen Fasern und/oder Fäden (17) Partikel (16) eingelagert und ganz oder teilweise durch das Bindemittel (11), ggf. ein Trägermittel, mechanische Verklammerung, Sintern oder Hippen mit den metallischen Fasern und/oder Fäden (17) der Deckschicht (13) verbunden werden, bevor die wenigstens eine Faserschicht (9) des Substrats (8) und die Deckschicht (13) im Bereich der metallischen Fasern und/oder Fäden (17) mit Bindemittel (11) getränkt werden.

2. Verfahren zum Herstellen eines Schichtkörpers nach Anspruch 1, **dadurch gekennzeichnet, dass** die Partikel (16) in einem pastösen oder flüssigen Trägermittel bereitgestellt werden, und dass die Deckschicht (13) zumindest im Bereich der metallischen Fasern und/oder Fäden (17) zum Einlagern der Partikel (16) darin in das Trägermittel getaucht oder von diesem durchströmt wird.

3. Verfahren zum Herstellen eines Schichtkörpers nach Anspruch 2, **dadurch gekennzeichnet, dass** als Trägermittel eine flüssige Lösung, insbesondere eine alkoholische oder alkoholähnliche Lösung, beispielsweise Ethanol, verwendet wird, und dass das Trägermittel vor dem Tränken der wenigstens einen Faserschicht (9) des Substrats (8) und der Deckschicht (13) im Bereich der metallischen Fasern und/oder Fäden (17) mit Bindemittel (11) unter Zurückbelassung von Partikeln (16) an den metallischen Fasern und/oder Fäden (17) der Deckschicht (13) entfernt wird.

4. Verfahren zum Herstellen eines Schichtkörpers nach Anspruch 2, **dadurch gekennzeichnet, dass** als Trägermittel ein Lot, ein Haftmittel, wie insbesondere ein Kleber, oder ein Thermoplast verwendet wird, und dass das Trägermittel zusammen mit Partikeln (16) während des Tränkens der wenigstens einen Faserschicht (9) des Substrats (8) und der Deckschicht (13) im Bereich der metallischen Fasern und/oder Fäden (17) mit Bindemittel (11) an den metallischen Fasern und/oder Fäden (17) der Deckschicht (13) verbleibt.

5. Verfahren zum Herstellen eines Schichtkörpers nach Anspruch 4, **dadurch gekennzeichnet, dass** die Partikel (16) vor dem Kontakt des Trägermittels mit den metallischen Fasern und/oder Fäden (17) der Deckschicht (13) durch Einpressen oder Einsintern in das Trägermittel gebracht werden.

6. Verfahren zum Herstellen eines Schichtkörpers nach Anspruch 1, **dadurch gekennzeichnet, dass** die Partikel (16) in Pulverform bereitgestellt werden, und dass die Deckschicht (13) zumindest im Bereich der metallischen Fasern und/oder Fäden (17) zum Einlagern der Partikel (16) darin in das Partikelpulver getaucht oder von diesem durchströmt wird.

7. Verfahren zum Herstellen eines Schichtkörpers nach einem der Ansprüche 1 bis 6, **dadurch gekennzeichnet, dass** die Partikel (16) ganz oder teilweise durch das Bindemittel (11), ggf. das Trägermittel, mechanische Verklammerung mit den metallischen Fasern und/oder Fäden (17) der Deckschicht (13), Sintern oder Hippen mit den metallischen Fasern und/oder Fäden (17) der Deckschicht (13) verbunden werden.

8. Verfahren zum Herstellen eines Schichtkörpers nach einem der Ansprüche 1 bis 7, **dadurch gekennzeichnet, dass** aus den metallischen Fasern und/oder Fäden (17) der Deckschicht (13) ein Filz (14, 14a, 14b), ein Geflecht und/oder ein Gewebe (18a, 18b, 18c, 18d) gebildet wird, bevor Partikel (16) darin eingelagert werden.

9. Verfahren zum Herstellen eines Schichtkörpers nach einem der Ansprüche 1 bis 8, **dadurch gekennzeichnet, dass** die wenigstens eine Faserschicht (9) des Substrats (8) und die Deckschicht (13) im Bereich der metallischen Fasern und/oder Fäden (17) zonenweise mit Bindemittel (11) getränkt werden.

10. Verfahren zum Herstellen eines Schichtkörpers nach einem der Ansprüche 1 bis 9, **dadurch gekennzeichnet, dass** zum Bilden des Substrats (8) und der Deckschicht (13) und zu deren Verbindung ein einheitliches Bindemittel (11) verwendet wird.

11. Verfahren zum Herstellen eines Schichtkörpers nach einem der Ansprüche 1 bis 10, **dadurch gekennzeichnet, dass** das Tränken der wenigstens einen Faserschicht (9) des Substrats (8) und der Deckschicht (13) im Bereich der metallischen Fasern und/oder Fäden (17) mit Bindemittel (11) in einer Form oder einem Formhohlraum erfolgt.

12. Verfahren zum Herstellen eines Schichtkörpers nach einem der Ansprüche 1 bis 11, **dadurch gekennzeichnet, dass** die Deckschicht (13) auf ihrer dem Substrat (8) abgewandten Seite nach dem Tränken der wenigstens einen Faserschicht (9) des Substrats (8) und der Deckschicht (13) im Bereich der metallischen Fasern und/oder Fäden (17) mit Bindemittel (11) und insbesondere nach dem Verfestigen des letzteren einer Oberflächenbehandlung unterzogen wird.

## Revendications

1. Procédé de fabrication d'un corps stratifié comportant un substrat, qui comporte au moins une couche de fibres, et comportant une couche de recouvrement adjacente à cette dernière, qui comporte des fibres et/ou des fils métalliques, adjacents à ladite au moins une couche de fibres, ladite au moins une couche de fibres du substrat et les fibres et/ou fils métallique de la couche de recouvrement étant imprégnés d'un liant et le substrat et la couche de recouvrement étant de ce fait formés et liés, **caractérisé en ce que** des particules (16) sont enrobées dans la couche de recouvrement (13) dans la zone des fibres et/ou fils métalliques (17) et sont liées totalement ou partiellement avec les fibres et/ou fils métalliques (17) de la couche de recouvrement (13) par le liant (11), le cas échéant, un milieu support, par agrafage mécanique, frittage ou par compression isostatique à température élevée, avant que ladite au moins une couche de fibres (9) du substrat (8) et la couche de recouvrement (13) soient imprégnées d'un liant (11) dans la zone des fibres et/ou fils métalliques (17).

2. Procédé de fabrication d'un corps stratifié selon la revendication 1, **caractérisé en ce que** les particules (16) sont préparées dans un milieu support pâteux ou liquide, et **en ce que** la couche de recouvrement (13), au moins dans la zone des fibres et/ou fils métalliques (17), est immergée dans le milieu support ou est traversée par celui-ci, afin d'y inclure les particules (16).

3. Procédé de fabrication d'un corps stratifié selon la revendication 2, **caractérisé en ce que** le milieu support utilisé est une solution liquide, en particulier une solution alcoolique ou similaire à l'alcool, tel que l'éthanol, et **en ce que**, avant l'imprégnation de ladite au moins une couche de fibres (9) du substrat (8) et de la couche de recouvrement (13) dans la zone des fibres et/ou fils métalliques (17) avec le liant (11), le milieu support est éliminé en laissant des particules (16) sur les fibres et/ou fils métalliques (17) de la couche de recouvrement (13).

4. Procédé de fabrication d'un corps stratifié selon la revendication 2, **caractérisé en ce que** le milieu support utilisé est un métal d'apport de brasage, une matière adhésive, telle que notamment une colle, ou un thermoplastique, et **en ce que**, pendant l'imprégnation de ladite au moins une couche de fibres (9) du substrat (8) et de la couche de recouvrement (13) dans la zone des fibres et/ou fils métalliques (17) avec le liant (11), le milieu support, conjointement avec les particules (16), reste sur les fibres et/ou fils métalliques (17) de la couche de recouvrement (13).

5. Procédé de fabrication d'un corps stratifié selon la revendication 4, **caractérisé en ce que**, avant le contact du milieu support avec les fibres et/ou fils métalliques (17) de la couche de recouvrement (13), les particules (16) sont amenées dans le milieu support par compression ou frittage.

6. Procédé de fabrication d'un corps stratifié selon la revendication 1, **caractérisé en ce que** les particules (16) sont disponibles sous forme de poudre, et **en ce que** la couche de recouvrement (13), au moins dans la zone des fibres et/ou fils métalliques (17), est immergée dans la poudre de particules ou est traversée par celle-ci, afin d'y inclure les particules (16).

7. Procédé de fabrication d'un corps stratifié selon l'une quelconque des revendications 1 à 6, **caractérisé en ce que** les particules (16) sont liées totalement ou partiellement par le liant (11), le cas échéant, le milieu support, par agrafage mécanique avec les fibres et/ou fils métalliques (17) de la couche de recouvrement (13), par frittage ou compression isostatique à température élevée avec les fibres et/ou fils métalliques (17) de la couche de recouvrement (13).

8. Procédé de fabrication d'un corps stratifié selon l'une quelconque des revendications 1 à 7, **caractérisé en ce qu'**un feutre (14, 14a, 14b), un treillis et/ou un tissage (18a, 18b, 18c, 18d) est formé à partir des fibres et/ou fils métalliques (17) de la couche de recouvrement (13), avant que les particules (16) soient incluses dans celle-ci.

9. Procédé de fabrication d'un corps stratifié selon l'une quelconque des revendications 1 à 8, **caractérisé en ce que** ladite au moins une couche de fibres (9) du substrat (8) et la couche de recouvrement (13) dans la zone des fibres et/ou fils métalliques (17) sont imprégnées par zones avec le liant (11).

10. Procédé de fabrication d'un corps stratifié selon l'une quelconque des revendications 1 à 9, **caractérisé en ce qu'**un seul liant (11) est utilisé pour former le substrat (8) et la couche de recouvrement (13) et pour l'assemblage de ceux-ci.

11. Procédé de fabrication d'un corps stratifié selon l'une quelconque des revendications 1 à 10, **caractérisé en ce que** l'imprégnation de ladite au moins une couche de fibres (9) du substrat (8) et de la couche de recouvrement (13) dans la zone des fibres et/ou fils métalliques (17) avec le liant (11) est effectuée dans un moule ou une cavité de moulage.

12. Procédé de fabrication d'un corps stratifié selon l'une quelconque des revendications 1 à 11, **caractérisé en ce que** la couche de recouvrement (13), sur sa face opposée au substrat (8), est soumise à un traitement de surface après l'imprégnation de ladite au moins une couche de fibres (9) du substrat (8) et de la couche de recouvrement (13) dans la zone des fibres et/ou fils métalliques (17) avec le liant (11) et, en particulier, après le durcissement de ce dernier.

## Claims

1. Method for the production of a laminated body with a substrate containing at least one fibre layer and with a covering layer adjoining the latter, which contains metallic fibres and/or filaments at least adjacent to the at least one fibre layer, wherein the at least one fibre layer of the substrate and the metallic fibres and/or filaments of the covering layer are impregnated with binding agent, whereby the substrate and the covering layer are produced and joined, **characterised in that** particles (16) are incorporated into the covering layer (13) in the area of the metallic fibres and/or filaments (17) and are wholly or partially joined to the metallic fibres and/or filaments (17) of the covering layer (13) by the binding agent (11), possibly by a carrier material, by mechanical clamping, sintering or hot isostatic pressing, before the at least one fibre layer (9) of the substrate (8) and the covering layer (13) are impregnated with binding agent (11) in the area of the metallic fibres and/or filaments (17).

2. Method for the production of a laminated body according to claim 1, **characterised in that** the particles (16) are provided in a pasty or liquid carrier material, and **in that** the covering layer (13) is, at least in the area of the metallic fibres and/or filaments (17), immersed into or penetrated by the carrier material to incorporate the particles (16).

3. Method for the production of a laminated body according to claim 2, **characterised in that** a liquid solution, in particular an alcohol or alcohol-like solution such as ethanol, is used as a carrier material, and **in that** the carrier material is removed before the at least one fibre layer (9) of the substrate (8) and the covering layer (13) are impregnated with binding agent (11) in the area of the metallic fibres and/or filaments (17), leaving behind particles (16) on the metallic fibres and/or filaments (17) of the covering layer (13).

4. Method for the production of a laminated body according to claim 2, **characterised in that** a solder, a bonding agent, in particular an adhesive, or a thermoplastic material is used as a carrier material, and **in that** the carrier material together with the particles (16) remains on the metallic fibres and/or filaments (17) of the covering layer (13) while the at least one fibre layer (9) of the substrate (8) and the covering layer (13) are impregnated with binding agent (11) in the area of the metallic fibres and/or filaments (17).

5. Method for the production of a laminated body according to claim 4, **characterised in that** the particles (16) are pressed or sintered into the carrier material before the carrier material contacts the metallic fibres and/or filaments (17) of the covering layer (13).

6. Method for the production of a laminated body according to claim 1, **characterised in that** the particles (16) are provided as a powder, and **in that** the covering layer (13) is, at least in the area of the metallic fibres and/or filaments (17), immersed into or penetrated by the particle powder to incorporate the particles (16).

7. Method for the production of a laminated body according to any of claims 1 to 6, **characterised in that** the particles (16) are wholly or partially joined to the metallic fibres and/or filaments (17) of the covering layer (13) by the binding agent (11), possibly by the carrier material, by mechanical clamping, sintering or hot isostatic pressing.

8. Method for the production of a laminated body according to any of claims 1 to 7, **characterised in that** a felt (14, 14a, 14b), a braided and/or woven fabric (18a, 18b, 18c, 18d) is produced from the metallic fibres and/or filaments (17) of the covering layer (13) before particles (16) are embedded therein.

9. Method for the production of a laminated body according to any of claims 1 to 8, **characterised in that** zones of the at least one fibre layer (9) of the substrate (8) and the covering layer (13) are impregnated with binding agent (11) in the area of the metallic fibres and/or filaments (17).

10. Method for the production of a laminated body according to any of claims 1 to 9, **characterised in that** a uniform binding agent (11) is used to produce and join the substrate (8) and the covering layer (13).

11. Method for the production of a laminated body according to any of claims 1 to 10, **characterised in that** the at least one fibre layer (9) of the substrate (8) and the covering layer (13) are impregnated with binding agent (11) in the area of the metallic fibres and/or filaments (17) within a mould or a mould cavity.

12. Method for the production of a laminated body according to any of claims 1 to 11, **characterised in that** the side of the covering layer (13) which is remote from the substrate (8) is subjected to a surface treatment following the impregnation of the at least one fibre layer (9) of the substrate (8) and the covering layer (13) with binding agent (11) in the area of the metallic fibres and/or filaments (17), in particular after the latter has set.
